(19) Europäisches Patentamt
European Patent Office
Office européen des brevets

(11) **EP 4 446 957 A1**

(12) **EUROPEAN PATENT APPLICATION**

(43) Date of publication:
**16.10.2024   Bulletin 2024/42**

(21) Application number: **23167790.7**

(22) Date of filing: **13.04.2023**

(51) International Patent Classification (IPC):
*G06Q 10/06* (2023.01)   *F24F 1/00* (2019.01)
*F24F 11/00* (2018.01)   *G06Q 10/063* (2023.01)
*G06Q 10/0631* (2023.01)   *G06Q 50/06* (2024.01)
*G16Y 10/35* (2020.01)   *G16Y 20/10* (2020.01)
*G16Y 20/30* (2020.01)   *F24F 130/10* (2018.01)
*F24F 140/60* (2018.01)

(52) Cooperative Patent Classification (CPC):
**G06Q 10/06; F24F 11/30; F24F 11/47;
G06Q 10/063; G06Q 10/06313; G06Q 50/06;
G16Y 10/35; G16Y 20/10; G16Y 20/30;**
F24F 2140/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Bhuiyan, Shihabul
573943 Singapur (SG)**
• **Tanyildiz, Baris
574036 Singapore (SG)**

(54) **A DEVICE, METHOD AND SYSTEM FOR DETERMINING A COEFFICIENT FOR ESTIMATING AN ACTUAL POWER CONSUMPTION, AND FOR ESTIMATING THE ACTUAL POWER CONSUMPTION**

(57)    Disclosed is a device for determining a coefficient for estimating an actual power consumption of a heating, ventilation, and air-conditioning (HVAC) unit comprising a processor configured to obtain: a first temperature reading of an evaporator of the HVAC unit; a second temperature reading of a condenser of the HVAC unit; a running frequency of a compressor of the HVAC unit, wherein the processor is further configured to calculate: (i.) an adjusted power consumption based on the first temperature reading, the second temperature reading, and the running frequency, and (ii.) the coefficient based on the adjusted power consumption, and a nominal power consumption of the HVAC unit. Further disclosed is a device for estimating an actual power consumption of the HVAC unit, and systems and methods for determining a coefficient for estimating an actual power consumption of the HVAC unit, and for estimating an actual power consumption of the HVAC unit.

FIG. 1

**Description**

**TECHNICAL FIELD**

The present disclosure relates to a device, method and system for determining a coefficient for estimating an actual power consumption of a heating, ventilation, and air-conditioning (HVAC) unit; and for estimating the actual power consumption of the HVAC unit.

**BACKGROUND**

An actual power consumption of a heat exchanger system such as a HVAC unit may be estimated without the use of meters or measurement devices (also known as meterless power estimations) under standard operating conditions. However, estimations of the actual power consumption of the HVAC unit based on meterless power estimations under non-standard operating conditions are often inaccurate. Factors which contribute to non-standard operating conditions of such HVAC units include fouling and/or the use of non-standard refrigerant piping lengths for connecting the condenser (for example an outdoor condenser unit) to the evaporator (for example an indoor evaporator unit), and vice versa, of the HVAC unit.

Fouling is a naturally occurring phenomena that results in the formation and accumulation of unwanted material deposits on the HVAC unit. This results in issues such as filter clogging leading to heat transfer capacity deterioration, and adversely affects the operation of the HVAC unit. Further, the use of non-standard refrigerant pipe lengths also leads to inaccurate estimations of the actual power consumption of the HVAC unit.

A conventional solution includes estimating the actual power consumption of the HVAC unit based on approximating the extent of fouling through a number of estimated heat exchanger parameters, e.g. indoor and/or outdoor temperature readings, and mathematical modelling techniques. However, as fouling build-up is a complicated process, such parameters and modelling techniques fail to provide an accurate measure of the fouling extent, and adversely affects the accuracy of the estimated actual power consumption.

Accordingly, there exists a need for an improved device, system and/or method, that seeks to address at least one of the aforementioned issue(s).

**SUMMARY**

The disclosure was conceptualized to provide an improved device, system and method, for determining a coefficient for estimating an actual power consumption of the HVAC unit; and for estimating the actual power consumption of the HVAC unit based on said coefficient. To this end, the improved device, system and method, enables an accurate estimation of the actual power consumption of the HVAC unit under non-standard operating conditions, e.g. fouling which leads to filter clogging, and/or the use of non-standard refrigerant piping lengths. In particular, the present disclosure provides means for determining a coefficient for adjusting an estimated power consumption based on values of nominal power consumption, which may be estimated based on standard operating conditions of the HVAC unit. This allows a user to predict real-time power consumption or demand with satisfactory levels of accuracy, i.e. less than 10% error of the actual power consumption of the HVAC unit.

According to the present disclosure, a device for determining a coefficient for estimating an actual power consumption is provided in claim 1, and a device for estimating an actual power consumption is provided in claim 9. Systems according to the disclosure are defined in claims 11 and 12. A method according to the disclosure is defined in claim 14, and computer program comprising instructions to execute the method is defined in claim 15.

The dependent claims define some examples associated with the device and system, respectively.

**BRIEF DESCRIPTION OF THE DRAWINGS**

The disclosure will be better understood with reference to the detailed description when considered in conjunction with the non-limiting examples and the accompanying drawings, in which:

- FIG. 1 shows an exemplary schematic illustration of a device 100 for determining a coefficient 120 for estimating an actual power consumption 122 of a HVAC unit, and for estimating the actual power consumption 122 of the HVAC unit;
- FIGS. 2A, 2B and 2C show exemplary schematic illustrations of a device 200A, 200B, 200C for determining a coefficient 120 and for estimating the actual power consumption 122 of the HVAC unit; and
- FIG. 3 shows a flowchart of a method 300 for determining a coefficient for estimating an actual power consumption of the HVAC unit, and for estimating an actual power consumption of the HVAC unit.

## DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements. As used herein, the term "and/or" includes any and all combinations of one or more of the associated listed items.

Throughout the description, the term "nominal power consumption of the HVAC unit", may refer to one or more estimated power consumption values of the HVAC unit under standard operating conditions, i.e. meterless power estimations, which do not account for non-standard operating conditions such as fouling and/or the use of non-standard refrigerant piping length. Values of the nominal power consumption for the HVAC unit may be stored within a reference table. The reference table may be stored in a controller of the HVAC unit, or may be provided to the processor via a user interface.

Throughout the description, the term "coefficient" may refer to a value of a correction or robustness factor that is used to adjust the value of the nominal power consumption, to provide a more accurate estimation of the actual power consumption of the HVAC unit. In some embodiments, the coefficient may be a fouling factor of the HVAC unit, and may provide an indication of the extent of fouling of the HVAC unit. In some other embodiments, the coefficient may be a fouling factor due to fouling, or a piping correction factor that accounts for power consumption estimation inaccuracies due to the use of non-standard refrigerant piping lengths. It is contemplated that the coefficient may be a piping correction factor that accounts for power consumption estimation inaccuracies due to the use of non-standard refrigerant piping lengths.

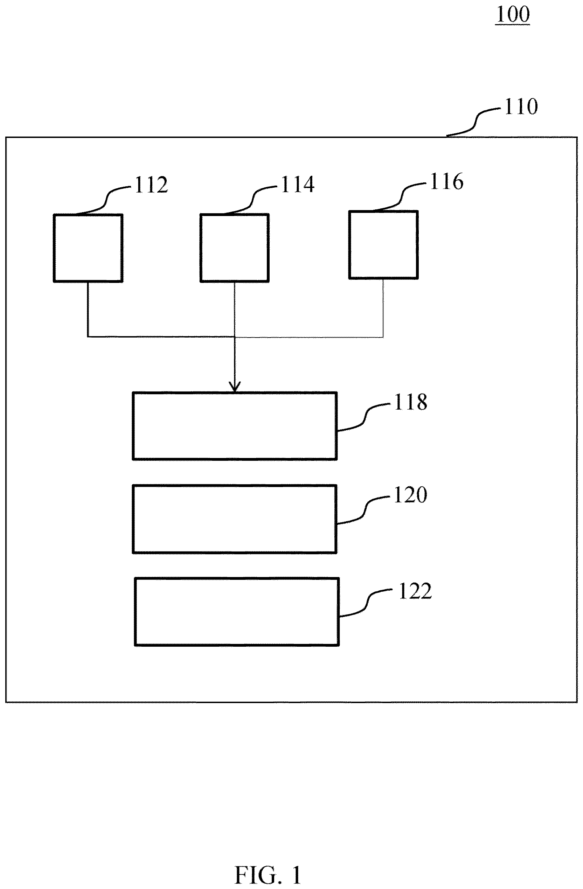

FIG. 1 shows an exemplary schematic illustration of a device 100 for determining a coefficient 120 for estimating an actual power consumption 122 of a HVAC unit, and for estimating the actual power consumption 122 of the HVAC unit. In some embodiments, the HVAC unit may be an air-conditioning unit. In some other embodiments, the HVAC unit may be a heating unit, or a ventilation unit. The HVAC unit may include one or more heat exchangers such as an evaporator and a condenser.

Referring to FIG. 1, device 100 includes a processor 110 configured to obtain a first temperature reading 112 of an evaporator of the HVAC unit; a second temperature reading 114 of a condenser of the HVAC unit; and a running frequency 116 of a compressor of the HVAC unit. In various embodiments, the first temperature reading 112 may have a value indicative of a condenser temperature; the second temperature reading 114 may have a value indicative of an evaporator temperature; and the running frequency 116 may have a value indicative of an operating frequency of the HVAC unit.

The processor 110 is further configured to calculate, (i.) an adjusted power consumption 118 based on the first temperature reading 112, the second temperature reading 114 and the running frequency 116. The adjusted power consumption 118 may be calculated based on a mathematical formula using the first temperature reading 112, the second temperature reading 114 and the running frequency 116 as parameters. For example, the adjusted power consumption 118 may be calculated based on Equation (1)

$$P_{adjusted}(kWh) = fn\left(T_1\,(°C), T_2\,(°C), f_{compressor}(Hz)\right) \qquad \text{Equation (1)}$$

where $P_{adjusted}$ refers to the adjusted power consumption 118 of the HVAC device, $T_1$ refers to the first temperature reading 112 of the evaporator, $T_2$ refers to the second temperature reading 114 of the condenser, and $f_{compressor}$ refers to the running frequency 116 of the compressor.

In some embodiments, the processor 110 may be further configured to compare the adjusted power consumption 118 to the nominal power consumption, e.g. meterless power estimation based on standard operating conditions, of the HVAC unit. This may enable a user to obtain information of an extent at which the HVAC unit is operating under non-standard conditions, e.g. due to fouling and/or use of non-standard refrigerant piping lengths. For example, when the adjusted power consumption 118 is greater than the nominal power consumption of the HVAC unit, this may be indicative of the presence of fouling thereby leading to higher power consumption due to filter clogging. That is, there may be restricted airflow from the HVAC unit, and the HVAC therefore has to operate at the adjusted power consumption 118, i.e. higher power consumption level.

As shown in FIG. 1, the processor 110 is further configured to calculate, (ii.) the coefficient 120 based on the adjusted power consumption 118 and a nominal power consumption. Values of the nominal power consumption may be stored in a reference table, and a user may obtain the values based on said reference table. In some embodiments, values of the nominal power consumption may be stored within the processor 110, or another processor 210 of the HVAC unit, and may be provided to the processor 110 for calculating the coefficient 120.

In various embodiments, the processor 110 may calculate the coefficient 120 for estimating an actual power consumption 122 of the HVAC unit, based on a ratio, e.g. a mathematical ratio, of the nominal power consumption to the adjusted power consumption 118. That is, the processor 110 may calculate the coefficient 120 based on Equation 2:

$$coefficient = \frac{P_{nominal}\ (kWh)}{P_{adjusted}\ (kWh)} \qquad \text{Equation (2)}$$

where $P_{nominal}$ represents values of the nominal power consumption, e.g. meterless power estimation, based on standard operating conditions, and $P_{adjusted}$ represents the adjusted power consumption 118 of the HVAC unit calculated in accordance with Equation (1). The coefficient 120 may therefore be a correction factor for adjusting the value of the nominal power consumption, which is determined based on standard operating conditions, to provide a more accurate estimation of the actual power consumption 122 of the HVAC unit, under non-standard operating conditions, for example, due to fouling and/or the use of non-standard refrigerant piping lengths.

In various embodiments, the processor 110 is further configured to estimate the actual power consumption 122 of the HVAC unit based on the coefficient 120, and the nominal power consumption of the HVAC unit. The processor 110 may calculate the actual power consumption 122 based on the mathematical expression defined in Equation 3:

$$P_{actual}(kWh) = coefficient \times P_{nominal}(kWh) \qquad \text{Equation (3)}$$

where $P_{actual}$ represents the actual power consumption 122 of the HVAC unit, *coefficient* represents coefficient 120, calculated based on the adjusted power consumption 118 and the nominal power consumption of the HVAC unit, and $P_{nominal}$ represents values of the nominal power consumption. Estimation of the actual power consumption 122 based on Equation 3 provides a more accurate estimation of the HVAC unit power consumption by correcting the values of the nominal power consumption, which are estimated based on standard operating conditions, with the coefficient 120.

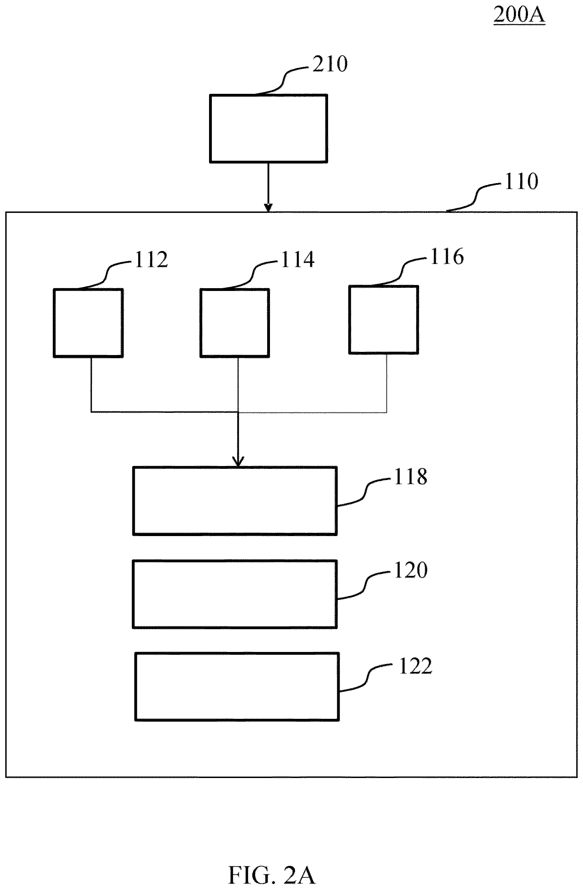

FIG. 2A shows another exemplary schematic illustration of a device 200A for determining a coefficient 120 and for estimating the actual power consumption 122 of the HVAC unit. In various embodiments, the processor 110 is configured to obtain at least one of the first temperature reading 112 of the evaporator, the second temperature reading 114 of the condenser, and the running frequency 116 of the compressor, from another processor 210 of the HVAC unit. The another processor 210 may be a controller, e.g. microprocessor for the HVAC unit, and values of the nominal power consumption of the HVAC unit within the reference table may be stored within the another processor 210. In some embodiments, the first temperature reading 112, the second temperature reading 114, and the running frequency 116 of the compressor may be obtained from generic compressor specification sheet information of the HVAC unit which is stored within the another processor 210 of the HVAC unit.

The first temperature reading 112, second temperature reading 114, and running frequency 116 of the compressor may be provided to the processor 110 via wireless means, for example, in accordance with pre-defined wireless communication protocols. Examples of the pre-defined wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth, ZigBee, SigFox, LPWan, LoRaWan, GPRS, 3G, 4G, LTE, and 5G communication systems. Alternatively, the first temperature reading 112, second temperature reading 114, and running frequency 116 of the compressor, may be provided to the processor 110 via wired means.

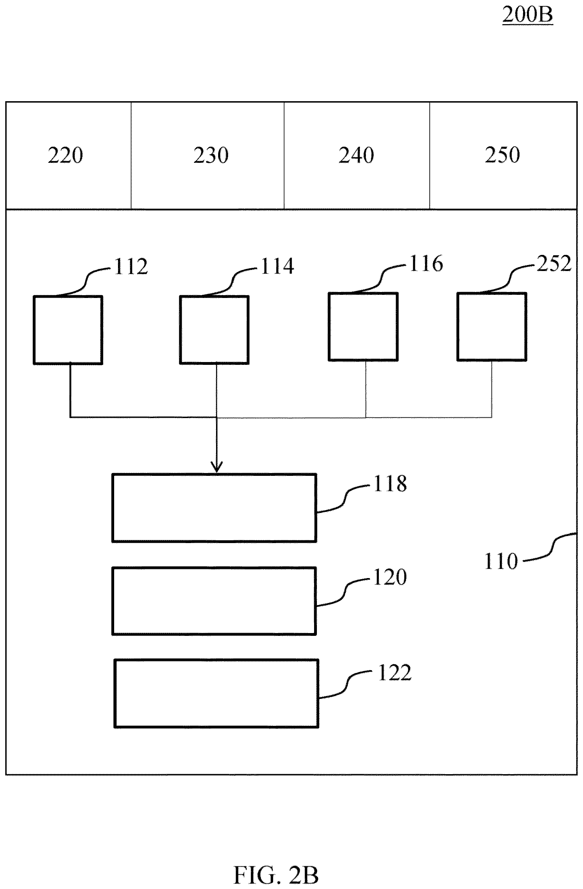

FIG. 2B shows another exemplary schematic illustration of a device 200B for determining a coefficient 120 and for estimating the actual power consumption 122 of the HVAC unit. In various embodiments, the device 200B may further comprise a first sensor 220 for measuring the first temperature reading 112 of the evaporator of the HVAC unit; and a second sensor 230 for measuring the second temperature reading 114 of the condenser of the HVAC unit. The first 220 and second 230 sensors may be temperature sensors positioned at the evaporator, and condenser, respectively, of the HVAC unit. The device 200B may further comprise a third sensor 240 for measuring the running frequency 116 of the compressor of the HVAC unit. The third sensor 240 may be a multimeter, e.g. frequency meter for measuring said running frequency 116. Therefore, the parameters of the first temperature reading 112, the second temperature reading 114 and the running frequency 116 of the HVAC unit may be measured via device 200B.

As described above, non-standard operating conditions of such HVAC units may most commonly be attributed to fouling, and may be further attributed to the use of non-standard refrigerant piping lengths for connecting the condenser, i.e. an outdoor condenser unit, to the evaporator, i.e. an indoor evaporator unit, and vice versa, of the HVAC unit. Standard refrigerant piping lengths may be 5metres (m) or 7m in length, and the use of non-standard refrigerant piping lengths may include the use pipes which are greater than, or less than the standard lengths. For example, the HVAC unit may include two refrigerant pipes, the first refrigerant pipe for supplying hot gas phase refrigerant to the condenser, and the second refrigerant pipe for supplying liquid refrigerant to the evaporator in the cooling mode, e.g. when the HVAC unit is an air-conditioning unit, and vice versa in the heating mode, e.g. when the HVAC unit is a heating unit.

As shown in FIG. 2B, device 200B may further include a user interface 250 for obtaining a non-standard known length of a refrigerant pipe 252 which connects the condenser to the evaporator of the HVAC unit. In some embodiments, said non-standard length of the refrigerant 252 may be known and may be provided with the datasheet, e.g. generic specification sheet, of the HVAC unit, and a user may therefore input the known non-standard length of the refrigerant pipe 252 via the user interface 250. In this embodiment, the processor 110 may be further configured to calculate (i.) the adjusted power consumption 118 based on the first temperature reading 112, the second temperature reading 114, the running frequency 116 of the compressor, and the known length of the refrigerant pipe 252; and may further calculate (ii.) the coefficient 120 based on the adjusted power consumption 118, and the nominal power consumption of the HVAC unit. Accordingly, the coefficient 120 which further considers the non-standard known length of the refrigerant pipe 252, may be a correction factor that considers both the extent of fouling and the use of non-standard refrigerant piping lengths, to provide a more accurate estimation of the actual power consumption 122 of the HVAC unit.

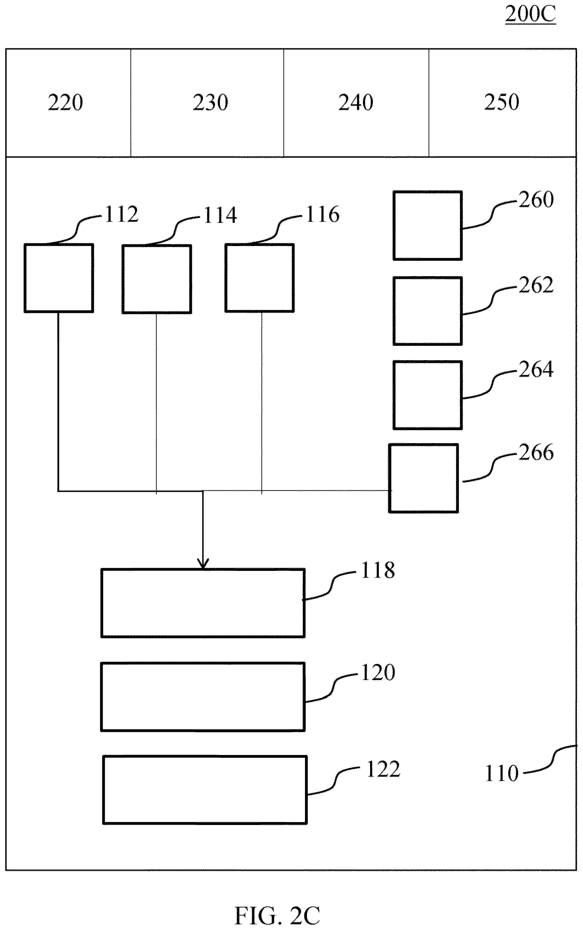

FIG. 2C shows another exemplary schematic illustration of a device 200C for determining a coefficient 120 and for estimating the actual power consumption 122 of the HVAC unit, which further considers the use of a non-standard length of a refrigerant pipe. Device 200C may be based on device 100, 200A, 200B described with reference to FIGS. 1 to 2B and repeated descriptions are omitted for brevity.

In some other embodiments, the non-standard length of the refrigerant pipe may not be known, and may be instead be determined based on standard test results of the HVAC unit. Referring to FIG. 2C, the processor 110 may be configured to obtain standardized test results 260 comprising measurements of a performance of the HVAC unit under a plurality of conditions, e.g. fixed indoor and outdoor temperatures as test conditions, via the user interface 250 and/or the another processor 210 (not shown) of the HVAC unit. Such standardized test results 260 may include the EU's Energy-Related Products Direction (ErP Directive) and other standards for heat exchanger systems such as the ISO-14825 and ISO-14511 standards, and may include results as such the supplied cooling or heating capacity, power consumption, efficiency for the different operating modes, e.g. cooling or heating, of the HVAC unit.

As shown in FIG. 2C, the processor 110 may be further configured to calculate the (i.) baseline power consumption 262 of the HVAC unit based on the standardized test results 260; (ii.) the difference 264 between the baseline power consumption 262 and the nominal power consumption of the HVAC unit; and (iii.) the length of the refrigerant pipe 266 which connects the condenser to the evaporator of the HVAC unit, based on the difference 264 between the baseline power consumption 262 and the nominal power consumption of the HVAC unit. For example, when non-standard refrigerant piping lengths are used, a correction table may be provided. The correction table may include, for example, standardized test results 260 including the outdoor temperature, indoor temperature, operating mode, and difference in the refrigerant piping length of HVAC unit and standard piping lengths, for the determination of corrected, e.g. extra or reduced, power consumption levels due to the use of non-standard refrigerant piping lengths. The baseline power consumption 262 may therefore be obtained from the standardized test results 260, and the difference 264 between the baseline power consumption 262 and the nominal power consumption may be determined. Based on said difference, the length of the refrigerant pipe 266 may be determined.

Accordingly, it may be possible to determine the difference between the (non-standard) length of the refrigerant pipe in use in the HVAC unit, and the standard refrigerant pipe length of other HVAC units, which may be used in conjunction with values of the nominal power consumption, for estimating the actual power consumption 122 of the HVAC unit. In other words, the processor 110 may be configured to calculate (i.) the adjusted power consumption 118 based on the first temperature reading 112, the second temperature reading 114, the running frequency 116 of the compressor, and the calculated length of the refrigerant pipe 266; and (ii.) the coefficient 120 based on the adjusted power consumption 118 and the nominal power consumption of the HVAC unit. Accordingly, the coefficient 120 which further considers the calculated non-standard length of the refrigerant pipe 266, may be a correction factor that considers both the extent of fouling and the use of non-standard refrigerant piping lengths, to provide a more accurate estimation of the actual power consumption 122 of the HVAC unit.

In accordance with another aspect of the disclosure, there is disclosed a system for determining the coefficient 120 for estimating the actual power consumption 122 of the HVAC unit, and a system for estimating the actual power consumption 122 of the HVAC unit. The system may be based on and associated with device 100, 200A, 200B, 200C as described with reference to FIGS. 1 to 2C and repeated descriptions will be omitted.

In the system, the processor 110 may be arranged in signal or data communication with at least one of the another processor 210, the first sensor 220, the second sensor 230 and the third sensor 240, such that in operation, the processor 110 (i.) receives inputs from at least one of the another processor 210, the first sensor 220, the second sensor 230 and the third sensor 230; (ii.) calculates the adjusted power consumption 118 based on the first temperature reading 112 of the evaporator provided from the first sensor 220, the second temperature reading 114 of the condenser provided from the second sensor 230, and the running frequency 116 of the compressor provided from the third sensor 240. In various embodiments, the adjusted power consumption 118 may be calculated in accordance with Equation (1) as described above. The processor 110 may be further configured to (ii.) calculate the coefficient 120 based on the adjusted power consumption 118 and the nominal power consumption of the HVAC unit, in accordance with Equation (2) as described above; and to (iii.) calculate the actual power consumption 122 based on the coefficient 120 and the nominal power consumption of the HVAC unit, in accordance with Equation (3) as described above.

In some embodiments, the processor 110 may also be arranged in signal or data communication with the user interface 250 to obtain a length of a refrigerant pipe 254, or to obtain standardized test results 260 comprising measurements of the performance of the HVAC unit under a plurality of conditions, to calculate a length of a refrigerant pipe 266 based on the difference 264 between the baseline power consumption 262 and the nominal power consumption of the HVAC unit. Examples for determining the coefficient 120 based on the known length of the refrigerant pipe 254, or the calculated length of the refrigerant pipe 266 have been discussed above.

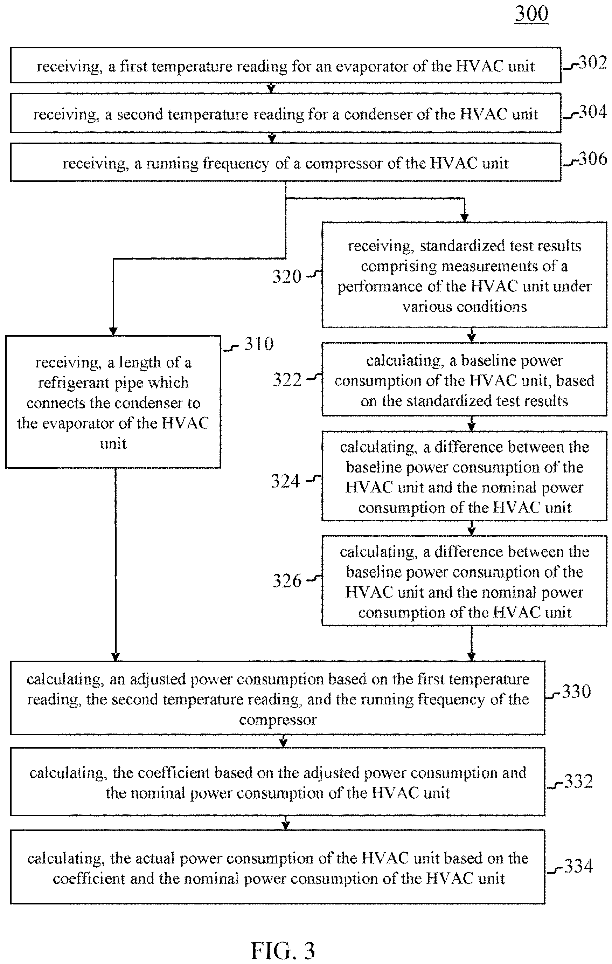

FIG. 3 shows a flowchart of a method 300 for determining a coefficient for estimating an actual power consumption of the HVAC unit, and for estimating an actual power consumption of the HVAC unit, in accordance with another aspect of the disclosure. Method 300 includes the steps of receiving, by a processor, a first temperature reading for an evaporator of the HVAC unit (step 302); receiving, by the processor, a second temperature reading for a condenser of the HVAC unit (step 304); receiving, by the processor, a running frequency of a compressor of the HVAC unit (step 306); calculating, by the processor, (i.) an adjusted power consumption based on the first temperature reading, the second temperature reading, and the running frequency of the compressor (step 330), in accordance with Equation (1); (ii.) the coefficient based on the adjusted power consumption and the nominal power consumption of the HVAC unit (step 332), in accordance with Equation (2); and (iii.) the actual power consumption of the HVAC unit based on the coefficient and the nominal power consumption of the HVAC unit (step 334), in accordance with Equation (3).

In some embodiments, method 300 may further include the step of: receiving, by the processor, a length of a refrigerant pipe which connects the condenser to the evaporator of the HVAC unit (step 310). Accordingly, the processor may calculate the adjusted power consumption based on the first temperature reading, the second temperature reading, the running frequency of the compressor, and the length of the refrigerant pipe (step 330).

In some other embodiments, method 300 may further include the step of: receiving, by the processor, standardized test results comprising measurements of a performance of the HVAC unit under a plurality of conditions (step 320); and calculating, by the processor, (i.) a baseline power consumption of the HVAC unit, based on the standardized test results (step 322); (ii.) a difference between the baseline power consumption of the HVAC unit and the nominal power consumption of the HVAC unit (step 324); and (iii.) a length of a refrigerant pipe which connects the condenser to the evaporator of the HVAC unit, based on the difference between the baseline power consumption and the nominal power consumption of the HVAC unit (step 326). Accordingly, the processor may calculate the adjusted power consumption based on the first temperature reading, the second temperature reading, the running frequency of the compressor, and the length of the refrigerant pipe determined in step 326 (step 330).

Various embodiments of the disclosure further provide a computer program product comprising software instructions which, when the program is executed on a processor, causes the processor to execute steps 302 to 326 of method 300 described with reference to FIG. 3.

The present disclosure provides an improved device, system and method that enables the determination of a correction factor, due to non-standard operating conditions such as fouling and/or use of non-standard refrigerant piping lengths, for estimating the actual power consumption of the HVAC unit with greater accuracy. Embodiments of the disclosure thus allows a user to predict, with greater accuracy, an electrical power demand of the HVAC unit.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

**Claims**

1. A device for determining a coefficient for estimating an actual power consumption of a heating, ventilation, and air-conditioning (HVAC) unit, the device comprising

   a processor configured to obtain
   a first temperature reading of an evaporator of the HVAC unit;
   a second temperature reading of a condenser of the HVAC unit; and
   a running frequency of a compressor of the HVAC unit;
   wherein the processor is further configured to calculate
   an adjusted power consumption based on the first temperature reading, the second temperature reading, and the running frequency, and
   the coefficient based on the adjusted power consumption, and a nominal power consumption of the HVAC unit.

2. The device of claim 1, wherein the processor is configured to calculate the coefficient as a ratio of the nominal power consumption to the adjusted power consumption.

3. The device of claim 1 or 2, wherein the processor is configured to obtain at least one of the first temperature reading, the second temperature reading, and the running frequency of the compressor, from another processor of the HVAC unit.

4. The device of claim 1 or 2, further comprising

   a first sensor for measuring the first temperature reading for the evaporator of the HVAC unit;
   a second sensor for measuring the second temperature reading for the condenser of the HVAC unit, and
   a third sensor for measuring the running frequency of the compressor of the HVAC unit.

5. The device of any one of claims 1 to 4, further comprising

   a user interface for obtaining a length of a refrigerant pipe which connects the condenser to the evaporator of the HVAC unit;
   wherein the processor is further configured to calculate the adjusted power consumption based on the first temperature reading, the second temperature reading, the running frequency of the compressor, and the length of the refrigerant pipe.

6. The device of any one of claims 1 to 4,

   wherein the processor is further configured to obtain standardized test results comprising measurements of a performance of the HVAC unit under a plurality of conditions, and
   wherein the processor is further configured to calculate
   a baseline power consumption of the HVAC unit, based on said standardized test results,
   a difference between the baseline power consumption and the nominal power consumption of the HVAC unit, and
   a length of a refrigerant pipe which connects the condenser to the evaporator of the HVAC unit, based on the difference between the baseline power consumption and the nominal power consumption of the HVAC unit.

7. The device of any one of claims 1 to 6, wherein the HVAC unit is an air-conditioning unit.

8. The device of any one of claims 1 to 7, wherein the coefficient is a fouling factor of the HVAC unit.

9. A device for estimating an actual power consumption of the HVAC unit, the device comprising

   a processor configured to obtain
   a first temperature reading of an evaporator of the HVAC unit;
   a second temperature reading of a condenser of the HVAC unit; and
   a running frequency of a compressor of the HVAC unit;
   wherein the processor is further configured to calculate
   an adjusted power consumption based on the first temperature reading, the second temperature reading, and the running frequency,

the coefficient based on the adjusted power consumption, and a nominal power consumption of the HVAC unit, and

the actual power consumption based on the coefficient and said nominal power consumption of the HVAC unit.

10. The device of claim 9, wherein the processor calculates the actual power consumption based on the following mathematical expression

$$P_{actual} = coefficient \times P_{nominal}$$

wherein $P_{actual}$ is the actual power consumption of the HVAC unit, and $P_{nominal}$ is the nominal power consumption of the HVAC unit.

11. A system for determining the coefficient for estimating the actual power consumption of the HVAC unit, of the device of any one of claims 3 to 8

wherein the processor is arranged in signal or data communication with at least one of the another processor, the first sensor, the second sensor, and the third sensor, such that in operation, the processor

receives inputs from the at least one of the another processor, the first sensor, the second sensor, and the third sensor,

calculates the adjusted power consumption based on the first temperature reading, the second temperature reading, and the running frequency of the compressor, and

calculates the coefficient based on the adjusted power consumption and the nominal power consumption of the HVAC unit.

12. A system for estimating the actual power consumption of the HVAC unit, of the device of any one of claims 3 to 10

wherein the processor is arranged in signal or data communication with at least one of the another processor, the first sensor, the second sensor and the third sensor, such that in operation, the processor

receives inputs from the at least one of the another processor, the first sensor, the second sensor, and the third sensor,

calculates the adjusted power consumption based on the first temperature reading, the second temperature reading, and the running frequency of the compressor,

calculates the coefficient based on the adjusted power consumption and the nominal power consumption of the HVAC unit, and

calculates the actual power consumption based on the coefficient and said nominal power consumption of the HVAC unit.

13. The system of claim 12, wherein the processor calculates the actual power consumption based on the following mathematical expression

$$P_{actual} = coefficient \times P_{nominal}$$

wherein $P_{actual}$ is the actual power consumption of the HVAC unit, and $P_{nominal}$ is the nominal power consumption of the HVAC unit.

14. A method for determining a coefficient for estimating an actual power consumption of a HVAC unit comprising the steps of

receiving, by a processor, a first temperature reading for an evaporator of the HVAC unit;
receiving, by the processor, a second temperature reading for a condenser of the HVAC unit;
receiving, by the processor, a running frequency of a compressor of the HVAC unit; calculating, by the processor, an adjusted power consumption based on the first temperature reading, the second temperature reading, and the running frequency of the compressor, and
the coefficient based on the adjusted power consumption, and a nominal power consumption of the HVAC unit.

15. A computer program product, comprising software instructions which, when the program is executed on a processor, causes the processor to execute the steps of claim 14.

<u>100</u>

110

112    114    116

118

120

122

FIG. 1

200A

FIG. 2A

<u>200B</u>

FIG. 2B

200C

| 220 | 230 | 240 | 250 |

112   114   116

260

262

264

266

118

120

122

110

FIG. 2C

<u>300</u>

receiving, a first temperature reading for an evaporator of the HVAC unit ⌐302

receiving, a second temperature reading for a condenser of the HVAC unit ⌐304

receiving, a running frequency of a compressor of the HVAC unit ⌐306

320 ⌐ receiving, standardized test results comprising measurements of a performance of the HVAC unit under various conditions

⌐ 310

receiving, a length of a refrigerant pipe which connects the condenser to the evaporator of the HVAC unit

322 ⌐ calculating, a baseline power consumption of the HVAC unit, based on the standardized test results

324 ⌐ calculating, a difference between the baseline power consumption of the HVAC unit and the nominal power consumption of the HVAC unit

326 ⌐ calculating, a difference between the baseline power consumption of the HVAC unit and the nominal power consumption of the HVAC unit

calculating, an adjusted power consumption based on the first temperature reading, the second temperature reading, and the running frequency of the compressor ⌐330

calculating, the coefficient based on the adjusted power consumption and the nominal power consumption of the HVAC unit ⌐332

calculating, the actual power consumption of the HVAC unit based on the coefficient and the nominal power consumption of the HVAC unit ⌐334

FIG. 3

Europäisches
Patentamt

European
Patent Office

Office européen
des brevets

# EUROPEAN SEARCH REPORT

Application Number

EP 23 16 7790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 103 363 630 A (TRANE INT INC)<br>23 October 2013 (2013-10-23)<br>* pages 1,3, 6-8; figures 1-28E *<br>----- | 1-9,11,<br>12,14,15<br>10,13 | INV.<br>G06Q10/06<br>F24F1/00<br>F24F11/00 |
| A | US 9 261 542 B1 (WEST MICHAEL KENNETH<br>[US]) 16 February 2016 (2016-02-16)<br>* the whole document *<br>----- | 1-15 | G06Q10/063<br>G06Q10/0631<br>G06Q50/06<br>G16Y10/35 |
| A | EP 0 069 996 B1 (SYSTEM HOMES KK [JP];<br>MITSUBISHI ELECTRIC CORP [JP])<br>27 December 1985 (1985-12-27)<br>* the whole document *<br>----- | 1-15 | G16Y20/10<br>G16Y20/30<br>F24F130/10<br>F24F140/60 |
| A | CN 106 123 218 B (GREE ELECTRIC APPLIANCES<br>INC ZHUHAI) 24 January 2020 (2020-01-24)<br>* the whole document *<br>----- | 1-15 | |

**TECHNICAL FIELDS SEARCHED (IPC)**

G06Q
F24F
G16Y

The present search report has been drawn up for all claims

| Place of search | Date of completion of the search | Examiner |
|---|---|---|
| Munich | 2 October 2023 | Bîrlescu, V |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

..................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 16 7790

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2023

| Patent document cited in search report | | Publication date | Patent family member(s) | | Publication date |
|---|---|---|---|---|---|
| CN 103363630 | A | 23-10-2013 | CN | 103363630 A | 23-10-2013 |
| | | | CN | 109297147 A | 01-02-2019 |
| US 9261542 | B1 | 16-02-2016 | US | 9261542 B1 | 16-02-2016 |
| | | | US | 9574810 B1 | 21-02-2017 |
| EP 0069996 | B1 | 27-12-1985 | AT | E17164 T1 | 15-01-1986 |
| | | | EP | 0069996 A1 | 19-01-1983 |
| | | | JP | S588956 A | 19-01-1983 |
| | | | JP | H0355736 B2 | 26-08-1991 |
| | | | US | 4420947 A | 20-12-1983 |
| CN 106123218 | B | 24-01-2020 | NONE | | |

For more details about this annex : see Official Journal of the European Patent Office, No. 12/82